# EUROPÄISCHE PATENTSCHRIFT

(11) **EP 2 723 111 B1**
(45) Veröffentlichungstag und Bekanntmachung des Hinweises auf die Patenterteilung: **06.12.2017**
(21) Anmeldenummer: 12075117.7
(22) Anmeldetag: 16.10.2012
(51) Int. Cl.: H04W 12/06, H04L 29/06, H04W 4/06, H04L 9/08

(54) **Mehrfaktor-Authentifikation für mobile Endgeräte**
Multiple factor authentification for mobile end devices
Authentification multifactorielle pour terminaux mobiles

(43) Veröffentlichungstag der Anmeldung: 23.04.2014
(73) Patentinhaber: Deutsche Telekom AG, 53113 Bonn (DE)
(72) Erfinder: Gundermann, Jens, 64846 Gross-Zimmern (DE); Wissmann, Günther, 53783 Eitorf (DE); Czech, Raimund, 42277 Wuppertal (DE); Ochse, Marco, 64295 Darmstadt (DE); Pietsch, Harald, 45473 Mühlheim an der Ruhr (DE); Schmidt, Sebastian, 60314 Frankfurt (DE)
(74) Vertreter: Nern, Peter-Michael

(56) Entgegenhaltungen:
- WO-A1-2012/087435
- US-A1- 2007 198 834
- "OMA Device Management Security ; OMA-TS-DM_Security-V1_3-20110720-D", OMA-TS-DM_SECURITY-V1_3-20110720-D, OPEN MOBILE ALLIANCE (OMA), 4330 LA JOLLA VILLAGE DR., SUITE 110 SAN DIEGO, CA 92122 ; USA , Nr. 1.3 20. Juli 2011 (2011-07-20), Seiten 1-24, XP064070051, Gefunden im Internet: URL:ftp/Public_documents/DM/DM-DM13/Perman ent_documents/ [gefunden am 2011-07-20]
- PROJECT EDITOR ET AL: "Text for ITU-T Recommendation X.eaa ISO/IEC 2nd CD 29115 -- Information technology - Security techniques - Entity authentication assurance framework ; ls0181Att", LS0181ATTACH1C-17, OPEN MOBILE ALLIANCE (OMA), 4330 LA JOLLA VILLAGE DR., SUITE 110 SAN DIEGO, CA 92122 ; USA , 12. Januar 2011 (2011-01-12), Seiten 1-43, XP064015305, Gefunden im Internet: URL:ftp/Public_documents/ARCH/2011/ [gefunden am 2011-01-12]
- "Wireless Application Protocol Public Key Infrastructure Definition ; OMA-WAP-WPKI-V1_1-20110301-A", OMA-WAP-WPKI-V1_1-20110301-A, OPEN MOBILE ALLIANCE (OMA), 4330 LA JOLLA VILLAGE DR., SUITE 110 SAN DIEGO, CA 92122 ; USA , Nr. 1.1 1. März 2011 (2011-03-01), Seiten 1-54, XP064025203, Gefunden im Internet: URL:ftp/Public_documents/ARCH/Permanent_do cuments/ [gefunden am 2011-03-15]

## Beschreibung

Die Erfindung betrifft ein Verfahren zur Authentifikation bei der Verwendung mobiler Endgeräte in einem Netzwerk. Sie bezieht sich auf ein Verfahren, bei welchem die Authentifikation zum Zweck der Nutzung von in dem betreffenden Netzwerk bereitgestellten Ressourcen mittels gemanagter, das heißt für die Verwendung in dem Netzwerk einem Mobilgeräte-Management unterworfener mobiler Endgeräte erfolgt. Gegenstand der Erfindung ist dabei ein Verfahren, bei welchem diese Authentifikation auf mindestens zwei voneinander unabhängige Faktoren gestützt wird.

Es ist bekannt, zur Nutzung von Ressourcen in einem Netzwerk mittels in das Netzwerk einbezogener Endgeräte eine stufenweise beziehungsweise eine sich auf mindestens zwei Faktoren stützende Authentifikation vorzusehen. So ist es beispielsweise üblich, dass sich Nutzer eines Firmennetzwerks zunächst gegenüber dem in das Firmennetzwerk einbezogenen Endgerät, wie einer Workstation, einem PC oder einem Laptop, authentifizieren und danach zur Nutzung der durch das Firmennetzwerk bereitgestellten Ressourcen mittels des betreffenden Endgeräts eine weitere Authentifikation gegenüber entsprechenden Netzwerkeinrichtungen erforderlich ist. Gegenüber dem vorgenannten Endgerät authentifiziert sich ein Nutzer dabei üblicherweise mit seinen Credentials, wie insbesondere einem ihn kennzeichnenden Identifikator beziehungsweise einer so genannten Nutzerkennung und einem persönlichen Passwort. Die weitere, gegenüber den Netzwerkeinrichtungen erfolgende Authentifikation, durch welche sichergestellt werden soll, dass nicht nur der Nutzer zur Verwendung der durch das Netzwerk bereitgestellten Ressourcen berechtigt ist, sondern dass er zu diesem Zweck auch ein dafür zugelassenes Endgerät verwendet, erfolgt dann häufig mittels eines an das betreffende Endgerät gebundenen Zertifikats, wie beispielsweise mittels eines auf einer durch das Endgerät auszulesenden Chipkarte gehaltenen Zertifikats und gegebenenfalls einer weiteren, durch den Nutzer einzugebenden PIN.

Entsprechende Authentifikationsverfahren finden insbesondere zunehmend als Bestandteil so genannter Enterprise-Lösungen in für den Zugriff durch außenstehende Dritte gesperrten Unternehmensnetzwerken Verwendung. Sie tragen dem erhöhten Sicherheitsbedürfnis von Konzernen beziehungsweise von Firmen Rechnung, welche hierdurch ihre Systeme gegenüber einem Ausspionieren durch diese gehaltener vertraulicher Daten und gegen eine Manipulation dieser Daten sowie der zum System gehörenden Technik, einschließlich der darauf ablaufenden Software schützen.

In der jüngeren Zeit finden in den Unternehmen in zunehmendem Maße auch mobile Endgeräte, wie insbesondere Tablet-PCs und Smartphones, Verwendung. Die Leistungsfähigkeit dieser Geräte, welche der stationärer Geräte teilweise kaum noch nachsteht, ermöglicht dabei auch die Nutzung komplexer Anwendungen und Daten als Teil der in einem jeweiligen Unternehmensnetzwerk bereitstehenden Ressourcen. Im Hinblick auf die Flexibilisierung der Arbeitsabläufe und auf die Tatsache, dass bestimmte Mitarbeiter, wie zum Beispiel leitende Angestellte und Entwicklungsingenieure, häufig nahezu jederzeit erreichbar sein und in Meetings erforderliche Informationen, welche in dem Unternehmensnetzwerk gehalten werden, unmittelbar zur Verfügung haben sollen, ist diese Entwicklung auch gewünscht. Daher werden entsprechende mobile Endgeräte den vorgenannten Personen inzwischen teilweise auch von ihrem Arbeitgeber zur Verfügung gestellt. Dabei ist es bekannt, die betreffenden mobilen Endgeräte als so genannte gemanagte Endgeräte zu betreiben. Die Geräte werden dabei im Hinblick auf ein störungsfreies und den Sicherheitserfordernissen des Unternehmens Rechnung tragendes Zusammenwirken mit dem Unternehmensnetzwerk im Kontext entsprechender Enterprise-Lösungen durch dafür als Teil eines Backendsystems des Unternehmens ausgebildete Einrichtungen für das Mobile-Device-Management (MDM-Einrichtungen), nämlich durch Einrichtungen für die Verwaltung und das Management innerhalb der Enterprise-Umgebung des Unternehmens nutzbarer mobiler Endgeräte, gemanagt.

Im Hinblick auf die eingangs genannten Sicherheitsprämissen wird dabei auch im Zusammenhang mit dem Einsatz derartiger gemanagter mobiler Endgeräte auf eine Zwei- oder Mehrfaktor-Authentifikation orientiert, also auf eine sich auf mindestens zwei Faktoren stützende Authentifikation. Allerdings ist es in diesem Zusammenhang eher unzweckmäßig, beispielsweise bei der Verwendung eines Smartphones, eine Authentifikation an die Benutzung eines auf einer Chipkarte gehaltenen Zertifikats zu koppeln. Abgesehen davon, dass hierfür eine Ausstattung der mobilen Endgeräte mit entsprechender Peripherie, wie Kartenlesern und dergleichen, erforderlich wäre, würde dies aber auch im Hinblick auf die Handhabung beziehungsweise die so genannte Usability eher unzweckmäßig sein. Eine andere Alternative bestünde darin vorzusehen, dass seitens des Nutzers für eine erfolgreiche Authentifikation zwei voneinander unabhängige Passwörter oder PINs beziehungsweise ein Passwort und eine PIN einzugeben oder sonstige zusätzliche Angaben zu machen sind. Aber auch dies würde im praktischen Arbeitsalltag sicherlich als eher unzweckmäßig angesehen werden. Insoweit kommt einer entsprechenden Usability, also einer hohen Nutzerfreundlichkeit, bei gleichzeitiger Wahrung der Sicherheitserfordernisse eine große Bedeutung zu, um eine entsprechende Akzeptanz von Lösungen zu gewährleisten, welche den Einsatz mobiler Endgeräte zur Nutzung von Ressourcen in einem Netzwerk im Rahmen einer Enterprise-Umgebung gestatten.

Der Stand der Technik zur Authentifizierung von mobilen Endgeräten ist z.B. in WO2012/087435 und XP64070051 beschrieben.

Aufgabe der Erfindung ist es, eine Lösung bereitzustellen, welche die Nutzung von in einem Netzwerk bereitgestellten Ressourcen mittels eines gemanagten mobiler Endgeräts unter Berücksichtigung der zur Gewährleistung einer hohen Sicherheit beim Umgang mit vertraulichen Daten bestehenden Authentifikationserfordernisse ermöglicht. Ein dafür anzugebendes Verfahren soll sich neben einer hohen Sicherheit durch eine gute Usability für den Nutzer auszeichnen, welcher das betreffende mobile Endgerät für die selbstverständlich nur nach erfolgreicher Authentifikation mögliche Nutzung der Ressourcen verwendet.

Die Aufgabe wird durch ein Verfahren mit den Merkmalen des Patentanspruchs 1 gelöst. Vorteilhafte Aus- und Weiterbildungen der Erfindung sind durch die nachgeordneten Unteransprüche gegeben.

An dieser Stelle sei zunächst klargestellt, dass sich das zur Lösung der Aufgabe vorgeschlagene Verfahren ausschließlich auf eine Authentifikation im Zusammenhang mit der Verwendung gemanagter mobiler Endgeräte bezieht. Hierbei handelt es sich vorzugsweise um Smartphones, Tablet-PCs, Netbooks oder Ultrabooks, gegebenenfalls aber auch Laptops herkömmlicher Prägung, denen aber jedenfalls gemeinsam ist, dass sie einem Mobilgeräte-Management unterworfen sind. Im Rahmen eines solchen Managements wird insbesondere durch eine die betreffenden Endgeräte (vorzugsweise in einer Enterprise-Umgebung) managende Instanz durch entsprechende Voreinstellungen an einem jeweiligen Endgerät und/oder durch Übertragung dazu geeigneter Daten an das mobile Endgerät festgelegt, in welcher Weise dieses genutzt werden kann. Gegebenenfalls kann es dabei auch vorgesehenen sein, ein mobiles Endgerät per Remote-Zugriff in einen Werkszustand oder in einen einer Anfangseinstellung der managenden Instanz entsprechenden Zustand zurückzusetzen. In jedem Falle sind die gemanagten Endgeräte als solche bei der managenden Instanz mittels eines ein jeweiliges Endgerät eindeutig bezeichnenden Geräteidentifikators, wie beispielsweise einer IMEI (International Mobile Equipment Identity) einer MAC-Adresse (Medium Access Control) registriert. Demnach stellt die Zugehörigkeit eines für die gewünschte Nutzung der Ressourcen verwendeten mobilen Endgeräts zur Gruppe der vom Betreiber des Netzwerks oder einem beauftragen Dritten gemangten Endgeräte eine Grundvoraussetzung dar.

Gemäß der Aufgabe bezieht sich das vorgeschlagene Verfahren auf ein Authentifikationsverfahren zum Zweck der Nutzung von in einem Netzwerk bereitgestellten Ressourcen mittels eines gemangten mobilen Endgeräts. Dabei ist das Verfahren so gestaltet, dass eine Nutzung der Ressourcen ausschließlich über eine Vermittlungsplattform ermöglicht ist. Bei einer solchen auch als Mobility Platform zu bezeichnenden Vermittlungsplattform handelt es sich um eine gewissermaßen als "Pförtner" fungierende Einrichtung, wobei der Begriff Einrichtung hierbei nicht zwingend ein einzelnes Computersystem, einen einzelnen Server oder dergleichen bezeichnet, sondern sich auch auf eine Gruppe entsprechender Geräte beziehen kann. In der zuvor genannten Funktion steuert die Vermittlungsplattform die zur Nutzung der Ressourcen erforderlichen Authentifikationsvorgänge und ermöglicht nach erfolgreicher Authentifikation einen Zugriff auf die gewünschten Ressourcen, welche durch entsprechende Netzwerkeinrichtungen wie Server und dergleichen, eventuell aber auch durch die Vermittlungsplattform selbst bereitgestellt werden. Es sei angemerkt, dass bei der Authentifikation erfolgende Überprüfungsvorgänge nicht zwingend durch die Vermittlungsplattform selbst erfolgen müssen, sondern auch hierbei die Vermittlungsplattform, entsprechend ihrer im Kontext der Darstellung der Erfindung gewählten Bezeichnung eine vermittelnde beziehungsweise steuernde Funktion hat. Unabhängig davon stützt sich aber die Authentifikation, wie nachfolgend deutlich wird, jedenfalls auf mindestens zwei Faktoren.

Demnach authentifiziert sich ein die Nutzung der Ressourcen mittels seines gemanagten mobilen Endgeräts wünschender Nutzer mit Hilfe seiner Credentials, nämlich eines ihn identifizierenden, das heißt als Person kennzeichnenden Identifikators und eines seine Identität bestätigenden persönlichen Passworts (Nutzerpasswort). Die Authentifizierung des Nutzers selbst kann unmittelbar gegenüber dem mobilen Endgerät oder aber, wie bevorzugt, über die Vermittlungsplattform gegenüber dieser selbst oder anderen Einrichtungen des Netzwerkbetreibers erfolgen. Unabhängig davon erfolgt ferner außerdem selbsttätig eine das mobile Endgerät identifizierende sowie dessen Zugehörigkeit zum Nutzer bestätigende Authentifizierung. Letzteres erfolgt, indem ein zuvor in Einrichtungen des Mobilgeräte-Managements registrierter Geräteidentifikator an die Vermittlungsplattform übertragen wird. Gemeinsam mit diesem Geräteidentifikator wird erfindungsgemäß an die Vermittlungsplattform ein Kommunikationsschlüssel übertragen, der in einem persistenten Speicher des mobilen Endgeräts gehalten wird, aus welchem ein gültiger Kommunikationsschlüssel nur bei korrekter Eingabe der Credentials des Nutzers auslesbar ist. Mit der Beendigung eines erfolgreichen Authentifikationsvorgangs wird dabei aber der bis dahin gültige Kommunikationsschlüssel durch einen neuen Kommunikationsschlüssel ersetzt, der durch das mobile Endgerät von der Vermittlungsplattform bezogen wird und der nur im Zusammenhang mit dem nächsten Verbindungsaufbau zur Vermittlungsplattform sowie ausschließlich für das ihn beziehende mobile Endgerät gültig ist. Durch die zuvor beschriebenen Umstände und Maßnahmen, dass nämlich ein gültiger Kommunikationsschlüssel aus dem persistenten Speicher des gemanagten mobilen Endgeräts nur bei korrekter Eingabe der Nutzer-Credentials auslesbar ist und die Ersetzung des Kommunikationsschlüssels in dem persistenten Speicher des mobilen Endgeräts durch einen neuen Kommunikationsschlüssel, ist sichergestellt, dass wenn im Zuge der Authentifikation ein gültiger Kommunikationsschlüssel bei der Vermittlungsplattform eingeht, es sich bei dem vom Nutzer verwendeten mobilen Endgerät auch um das zu dem Nutzer gehörende, gemanagte Endgerät handelt. Demnach stützt sich also der Authentifikationsvorgang auf die Authentifizierung des Nutzers selbst sowie auf die Authentifizierung des von ihm verwendeten, mittels seines Geräteidentifikators identifizierten mobilen Endgeräts und seiner Zugehörigkeit zu dem Nutzer, wobei es aber dennoch im Regelfall keiner zusätzlich Eingaben oder sonstigen Tätigkeiten (wie Einführen einer Chipkarte in ein Lesegerät) seitens des Nutzers bedarf. Etwas gegenüber dem zuvor zitierten Regelfall Abweichendes gilt nur für den Bezug eines initialen Kommunikationsschlüssels. Nur zum Bezug eines initialen Kommunikationsschlüssels, welcher im Falle einer erstmaligen Registrierung eines mobilen Endgeräts für die Nutzung der im Netzwerk bereitgestellten Ressourcen (sofern ein mobiles Endgerät für die Nutzung der Ressourcen neu angemeldet wird, verfügt das betreffende mobile Endgerät, zunächst noch nicht über einen gültigen Kommunikationsschlüssel) oder beispielsweise nach einem fehlgeschlagenen Authentifikationsvorgang oder einem Update des Betriebssystems des mobilen Endgeräts erforderlich ist oder sein kann, muss der Nutzer an seinem mobilen Endgerät ein Einmalpasswort eingeben, welches er über einen das mobile Endgerät selbst ausschließenden Weg erhält. Denkbar wäre hierbei beispielsweise der Versand eines Einmalpassworts seitens der die Vermittlungsplattform administrierenden oder der das Netzwerk betreibenden Stelle per Post.

Vorzugsweise wird jedoch dem Nutzer das Einmalpasswort zur Anforderung des initialen Kommunikationsschlüssels per E-Mail zugestellt, wobei die betreffenden E-Mail an ein E-Mail-Postfach übertragen wird, auf welches der Nutzer mittels eines anderen, bereits zur Nutzung in dem Netzwerk zugelassen Endgeräts, beispielsweise seines PCs beziehungsweise seiner stationären Arbeitsstation oder seines Laptops, Zugang hat, wobei zum Abruf der E-Mail gegenüber dem vorgenannten Endgerät ebenfalls eine, sich vorzugsweise auch auf mindestens zwei Faktoren stützende Authentifikation erforderlich ist. Auch die Anforderung des Einmalpassworts durch den Nutzer erfolgt dabei vorzugsweise mittels des schon erwähnten anderen, bereits zur Nutzung in dem Netzwerk zugelassen Endgeräts, also auf einem das das mobile Endgerät ausschließenden Weg.

Gemäß den vorstehenden Ausführungen ist im Hinblick auf den Ablauf des Verfahrens zwischen zwei grundsätzlichen Phasen zu unterscheiden. Bei der ersten Phase handelt es sich um eine Initialphase, in welcher durch den Nutzer zunächst die Zusendung eines Einmalpassworts beantragt und dann aufgrund eines bewussten Handelns des Nutzers durch diesen unter Verwendung des Einmalpassworts ein initialer Kommunikationsschlüssel angefordert und auf das Endgerät des Nutzers übertragen wird. Hiervon ist eine zweite, im Kontext der Darstellung der Erfindung auch als Regelbetrieb bezeichnete Phase zu unterscheiden, in welcher der jeweils für den nächsten Authentifikationsvorgang gültige Kommunikationsschlüssel ohne das Erfordernis einer zusätzlichen Eingabe des Nutzers und somit ohne ein bewusstes Handeln des Nutzers selbsttätig in den Authentifikationsvorgang gewissermaßen als Bestandteil des zweiten Authentifikationsfaktors einbezogen wird. Die zuvor erläuterte Aufteilung des Verfahrensablaufs in Initialisierungsschritt (Anforderung eines initialen Kommunikationsschlüssel mittels Einmalpasswort) und Regelbetrieb (selbsttätige Einbeziehung des zweiten Authentifikationsfaktors in den Authentifikationsvorgang) umfasst die Möglichkeit, dass unter bestimmten Voraussetzungen der Initialisierungsschritt mit Bezug des initialen Kommunikationsschlüssels erneut auszuführen ist - zum Beispiel, wie bereits erwähnt, im Falle eins fehlgeschlagenen Authentifikationsvorgangs, in dessen Ergebnis der Nutzer zum Bezug eines neuen Einmalpassworts und damit zum erneuten Anstoß des Initialisierungsvorgangs aufgefordert wird. Dies kann zum Bespiel aufgrund mehrfacher Falscheingabe des Nutzerpassworts oder aufgrund eines Abbruchs der Verbindung während des Authentifikationsvorgangs der Fall sein. Entsprechendes gilt vorzugsweise auch, wenn der Nutzer sein persönliches Passwort als Teil seiner Credentials ändert. Hierbei dient die Notwendigkeit der erneuten Anforderung eines initialen Kommunikationsschlüssels der Erhöhung der Sicherheit. Nur zur Klarstellung sei an dieser Stelle nochmals betont, dass hierzu wiederum die Beantragung eines Einmalpassworts durch den Nutzer erforderlich ist, da dieses - wie es die Bezeichnung zum Ausdruck bringt - nur einmalig für die Anforderung eines initialen Kommunikationsschlüssels verwendbar ist.

Soweit es sich bei dem zur Nutzung der Ressourcen und daher auch im Zusammenhang mit dem vorausgehenden Authentifikationsvorgang verwendeten mobilen Endgerät um ein mit Mobilfunksende- und Empfangsmitteln ausgestattetes Gerät handelt, dient im Rahmen des hier beschriebenen Authentifikationsverfahrens vorzugsweise dessen IMEI als Geräteidentifikator. Darüber hinaus kommt aber auch die Verwendung einer MAC-Adresse oder anderer eindeutiger Gerätekennzeichen oder einer Kombination der vorstehend beispielhaft genannten Kennzeichen in Betracht.

Entsprechend einer bevorzugten Ausgestaltung des erfindungsgemäßen Verfahrens wird das Einmalpasswort zur Anforderung des initialen Kommunikationsschlüssels mit Hilfe eines Zufallsgenerators erzeugt. Denkbar wäre es aber auch, das Einmalpasswort aus dem entsprechenden Geräteidentifikator des mobilen Endgeräts abzuleiten, für welches es angefordert wird. Unabhängig von der Art seier Erzeugung geschieht die Generierung des Einmalpassworts vorzugsweise unter Beachtung dazu vom Betreiber des Netzwerks, in welchem die Ressourcen zur Verfügung gestellt werden, festgelegter Bildungsregeln. Zudem erfolgt eine Erzeugung und Versendung des Einmalpassworts jedenfalls nur, sofern eine bei der Registrierung eines mobilen Endgeräts für die Nutzung der Ressourcen erfolgende Überprüfung ergibt, dass es sich bei dem entsprechenden mobilen Endgerät auch um ein gemangtes Endgerät des Nutzers handelt.

Soweit bei der Schilderung der vorstehenden Abläufe ausgeführt wurde, dass das Auslesen eines gültigen Kommunikationsschlüssels aus dem persistenten Speicher des mobilen Endgeräts nur bei korrekter Eingabe der Credentials des Nutzers möglich ist, meint dies, dass zwar auch im Falle einer fehlerhaften Eingabe der Credentials zusammen mit dem Geräteidentifikator ein Kommunikationsschlüssel an die Vermittlungsplattform übertragen wird - aber eben ein falscher, also ungültiger Kommunikationsschlüssel, da die entsprechende, den Kommunikationsschlüssel enthaltende Sequenz des persistenten Speichers falsch entschlüsselt wird. Dies hängt damit zusammen, dass der Kommunikationsschlüssel zur Ablage in dem persistenten Speicher des mobilen Endgeräts symmetrisch verschlüsselt wird. Hierzu soll nachfolgend noch genaueres ausgeführt werden.

Was die Reihenfolge der Authentifikation, nämlich der des Nutzers einerseits (Nutzerauthentifikation) und der des mobilen Endgeräts und seiner Zugehörigkeit zum Nutzer andererseits (Geräteauthentifikation) anbelangt, so erfolgt vorzugsweise die Geräteauthentifikation beziehungsweise die Überprüfung der dazu bei der Vermittlungsplattform eingehenden Daten zuerst, da hierbei das mobile Endgerät auch identifiziert und festgestellt wird, ob es sich überhaupt um ein gemanagtes Endgerät handelt. Ist dies nicht der Fall müssen die Daten zur Nutzeridentifikation nicht mehr überprüft werden und der Authentifikationsvorgang kann als gescheitert abgebrochen werden.

Im Hinblick auf den vorstehend schon mehrfach angesprochenen Kommunikationsschlüssel unterscheidet sich das vorgeschlagene Verfahren von dem bereits bekannten Einsatz so genannter Sitzungsschlüssel beziehungsweise Session-Keys. Letztere werden nämlich nach dem bereits erfolgten Aufbau einer Verbindung zwischen zwei Einrichtungen, wie einem Client, beispielsweise in Form eines PCs, und einem Server, von diesen beiden Einrichtungen für die sich daran anschließende Übertragung von (Nutz-) Daten vereinbart. Dabei ist ein entsprechender Sitzungsschlüssel jeweils nur bis zum Ablauf einer betreffenden Sitzung, also bis zu Beendigung des Datenaustauschs zwischen den beiden vorgenannten Einrichtungen gültig. Letzteres gilt auch für den Kommunikationsschlüssel. Jedoch wird dieser nach erfolgreicher Authentifikation bereits durch einen neuen für den nächsten Authentifikationsvorgang gültigen ersetzt. Demnach ist aber eine Übertragung von Nutzdaten (im Rahmen der Nutzung im Netzwerk bereitgestellter Ressourcen) nur nach erfolgreicher Authentifikation und damit bei Besitz eines gültigen Kommunikationsschlüssels schon für den Verbindungsaufbau selbst möglich. Netzwerkseitig wird der jeweils für den nächsten Authentifikationsvorgang und für ein bestimmtes mobiles Endgerät gültige Kommunikationsschlüssel durch die Vermittlungsplattform ebenfalls persistent gespeichert. Dies geschieht beispielsweise in einer Datenbank in Zuordnung zu dem das betreffende mobile Endgerät verwendenden Nutzer und/oder zu dem Endgerät selbst, wobei die Zuordnung zum Beispiel über den Nutzernamen, den öffentlichen Schlüssel des mobilen Endgeräts oder dessen Geräteidentifikator gegeben sein kann.

Vorzugsweise und gemäß einer entsprechenden Ausgestaltung des Verfahrens werden während des Authentifikationsvorgangs und bei der Nutzung der Ressourcen übertragene Daten verschlüsselt übertragen, um ein höchstmögliches Maß an Sicherheit zu erreichen. Dabei werden die zur Authentifikation zwischen dem gemangten mobilen Endgerät und der Vermittlungsplattform übertragenen Daten nach einem Public Key Verfahren verschlüsselt, wobei für das mobile Endgerät ein Schlüsselpaar mit einem privaten und einem öffentlichen Schlüssel erzeugt wird. In an sich bekannter Wiese werden an das mobile Endgerät übertragene Daten, wie insbesondere der nach erfolgreicher Authentifikation bereitgestellte, für den nächsten Verbindungsaufbau zur Vermittlungsplattform gültige Kommunikationsschlüssel, mit einem öffentlichen Schlüssel des mobilen Endgeräts und an die Vermittlungsplattform übertragene Daten mit einem öffentlichen Schlüssel der Vermittlungsplattform verschlüsselt.

Der für den nächsten Verbindungsaufbau zur Vermittlungsplattform gültige Kommunikationsschlüssel wird hingegen zur Ablage in dem persistenten Speicher des gemanagten mobilen Endgeräts mit dem privaten Schlüssel des mobilen Endgeräts symmetrisch verschlüsselt, wobei dieser private Schlüssel ebenfalls persistent in dem mobilen Endgeräte gespeichert wird und hierzu mit einer aus dem persönlichen Passwort des Nutzers durch Anwendung einer Hashfunktion gebildeten PIN symmetrisch verschlüsselt wird. Vorzugsweise wird zudem das persönliche Passwort des Nutzers bei der Hashwertbildung durch ein Salt ergänzt, welches unter Einbeziehung von Entropie-Quellen, wie eines Bewegungssensors oder eines Mikrofons des mobilen Endgeräts, mittels eines Zufallsgenerators erzeugt wird. Hierdurch wird die Sicherheit gegenüber Brute Force Attacken zur Berechnung des persönlichen Passworts aus der vorgenannten PIN erhöht.

Gemäß einer besonders vorteilhaften Weiterbildung der Erfindung wird außerdem ein Hashsplit des durch Anwendung der Hashfunktion erzeugten Hashwertes gebildet. Hierbei werden ein erster Teil des entstehenden Hashwertes in dem persistenten Speicher des mobilen Endgeräts und ein zweiter Teil persistent in Einrichtungen der Vermittlungsplattform gespeichert. Hierdurch ist es, wie an späterer Stelle noch erläutert werden soll, möglich im Falle eines Passwortwechsels des Nutzers dessen altes Passwort vorübergehend wieder zu restaurieren.

Durch das vorgeschlagene Verfahren beziehungsweise die zuvor geschilderten Maßnahmen, wird ein im hohen Maße manipulationssicheres Authentifikationsverfahren zur Verfügung gestellt, welches sich geleichzeitig insoweit durch eine gute Usability auszeichnet, als dass der Nutzer (im Regelbetrieb) ausschließlich seine Credentials eingeben muss, aber dennoch eine sichere Überprüfung nicht nur des Nutzers selbst, sondern auch des von ihm verwendeten mobilen Endgeräts und dessen Zugehörigkeit zum Nutzer ermöglicht ist. Dies resultiert insbesondere aus der Absicherung der sich bei der Authentifikation vollziehenden Vorgänge durch den temporär, nur für den nächsten Authentifikationsvorgang sowie ausschließlich für das ihn empfangende mobile Endgerät gültigen Kommunikationsschlüssel. Durch die in Weiterbildung des Verfahrens vorgesehenen Verschlüsselungsvorgänge, das heißt die symmetrische Verschlüsselung des in dem mobilen Endgerät jeweils gehaltenen Kommunikationsschlüssels mit dem privaten Schlüssel des mobilen Endgeräts und durch die Verschlüsselung dieses ebenfalls auf dem mobilen Endgerät abgelegten privaten Schlüssels mit einer durch Hashwertbildung aus dem persönlichen Passwort des Nutzers gebildeten PIN sowie durch eine verschlüsselte Übertragung der zur Authentifikation erforderlichen Daten wird dabei ein sehr wirksamer Schutz gegen Manipulationsversuche sowohl durch Brute-Force-Methoden als auch durch Man-in-the-Middle-Attacken erreicht. Dies gilt zumal die Authentifikation des mobilen Endgeräts und seiner Zugehörigkeit zum Nutzer unter Heranziehung des persönlichen Nutzerpassworts erfolgen kann, ohne dass hierbei das Passwort selbst zur Überprüfung in dem mobilen Endgerät gespeichert werden müsste und dieses damit einer erhöhten Kompromittierungsgefahr unterliegen würde.

Das Verfahren ist vorzugsweise für die Authentifikation zum Zweck der Nutzung von Ressourcen mittels auf mobilen Endgeräten ablaufender Minianwendungen (Apps) konzipiert. In diesem Falle wird Authentifikationsvorgang durch eine von dem Nutzer auf dem mobilen Endgerät zur Verwendung der Ressourcen gestartete App eingeleitet, wobei in alle die Nutzung von Ressourcen ermöglichenden Apps ein entsprechendes, den Authentifikationsvorgang einleitendes Modul integriert wird.

Im Zusammenhang mit einer Implementierung des Verfahrens zur Authentifikation bei der Nutzung in einem Netzwerk bereitgestellter Ressourcen mittels auf einem gemanagten mobilen Endgerät ablaufender Apps erfolgt vorzugsweise auch der Bezug eines initialen Kommunikationsschlüssels auf Veranlassung der jeweiligen App. Dabei ist das zur Durchführung des Authentifikationsvorgangs in die auf die Ressourcen zugreifenden Apps integrierte Modul so gestaltet, dass beim Start einer solchen App zunächst das Vorhandensein eines Kommunikationsschlüssels in dem persistenten Speicher des mobilen Endgeräts überprüft wird. Ist dies nicht gegeben, wird durch die App beziehungsweise das in sie integrierte Modul bei der Vermittlungsplattform ein initialer Kommunikationsschlüssel angefordert wird. Dabei wird der Nutzer von der betreffenden App zur Eingabe des dazu erforderlichen Einmalpassworts aufgefordert. Die Anforderung des initialen Kommunikationsschlüssels kann gegebenenfalls aber auch durch den Start einer speziellen Bereitstellungsapp erfolgen, welche den Nutzer zur Eingabe des ihm übermittelten Einmalpassworts auffordert. Jedoch ist der erstgenannten Variante der Vorzug zu geben.

Bei dem vorgestellten Verfahren handelt es sich, wie ausgeführt, um ein Authentifikationsverfahren zur Nutzung in einem Netzwerk bereitgestellter Ressourcen, so dass die sich nach erfolgreicher Authentifikation bei der Nutzung der Ressourcen vollziehenden Abläufe selbst nicht mehr Gegenstand der Erfindung sind. In diesem Kontext sind grundsätzlich auch die Bedeutung des Kommunikationsschlüssels und seine temporäre Gültigkeit für den jeweils nächsten Authentifikationsvorgang zu sehen. Dies schließt indes nicht die Möglichkeit aus, die Abläufe so zu gestalten, dass der Kommunikationsschlüssel auch bei der sich an die erfolgreiche Authentifikation unmittelbar anschließenden Sitzung zur Nutzung der Ressourcen für eine symmetrische Verschlüsselung der dabei übertragenen Daten (Nutzdaten) verwendet wird.

Für den Einsatz des erfindungsgemäßen Verfahrens und dessen Ablauf soll nachfolgend in der Art eines Ausführungsbeispiels ein mögliches Szenario anhand von Zeichnungen dargestellt werden. Dabei zeigen
- Fig. 1:: Ein Schema zur Erläuterung des Ablaufs bei der Anforderung und Übermittlung des Einmalpassworts
- Fig. 2:: Ein Schema zur Erläuterung des Regelbetriebs bei der Authentifikation

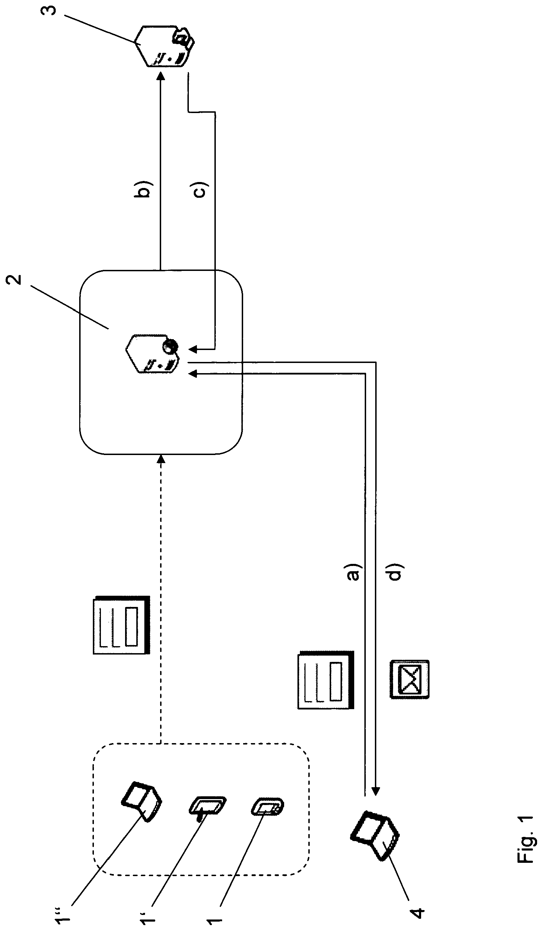

Anhand des in der Fig. 1 gezeigten Schemas soll der sich bei der Anforderung des Einmalpassworts durch einen Nutzer und bei der Übermittlung des Passworts an ein Endgerät 4 des betreffenden Nutzers vollziehende Ablauf erläutert werden. Hierbei wird davon ausgegangen, dass Mitarbeitern eines über eine Enterprise-IT-Umgebung verfügenden Unternehmens, wie beispielsweise eines Großunternehmens oder eines Konzerns, durch das Unternehmen gemanagte mobile Endgeräte 1, 1', 1" zur Verfügung gestellt werden. Dieses gemanagten mobilen Endgeräte 1, 1', 1" werden zuvor entsprechend den dienstlichen Erfordernissen und unter Berücksichtigung der Sicherheitsrichtlinien des Unternehmens durch die sie ausgebende IT-Abteilung konfiguriert. Im Zusammenhang damit werden in Einrichtungen 3 für das Mobilgeräte-Management (nachfolgend auch als MDM-Einrichtungen bezeichnet) Angaben zu den mobilen Endgeräten 1, 1', 1" erfasst. Hierbei handelt es sich neben dem Namen des Nutzers, an welchen das jeweiligen mobile Endgerät 1, 1', 1" ausgegeben wird, um gerätespezifische Angaben zur Identifikation des jeweiligen Endgeräts 1, 1', 1", wobei mindestens ein solcher Geräteidentifikator, wie beispielsweise eine Seriennummer, die IMEI eines Smartphones oder eine MAC-Adresse, vorzugsweise in einer Datenbank der MDM-Einrichtungen 3 abgelegt wird.

Für das hier beispielhaft dargestellte Szenario wird weiterhin davon ausgegangen, dass ein Nutzer, an welchen das mobile Endgerät 1 (im Weiteren wird als Beispiel von einem Smartphone 1 ausgegangen) ausgegeben wird, bereits über einen mittels eines anderen, in das (Firmen-) Netzwerk einbezogenen Endgeräts 4, nämlich beispielsweise mittels eines Laptops, nutzbaren Zugang zu der Enterprise-IT-Umgebung verfügt. Möchte nun der Nutzer nach dem Erhalt des gemanagten Smartphones 1 spezielle, in dem Netzwerk für mobile Endgeräte 1, 1' 1" bereitgestellte Ressourcen nutzen, so muss er das Smartphone 1 für diesen Zweck registrieren. Erst nach einer Registrierung ist es ihm dann möglich, sich beziehungsweise sich und das mobile Endgerät 1 zur Nutzung der Ressourcen gemäß dem vorgeschlagenen Verfahren zu authentifizieren. Zur Registrierung ruft der Nutzer gemäß Schritt a) mittels des ihm bereits zur Verfügung stehenden Endgeräts 4 beziehungsweise des Laptops beispielsweise auf der Vermittlungsplattform 2 eine spezielle, mittels eines Browsers nutzbare Registrierungsseite auf, wobei er sich hierzu in gewohnter Weise, nämlich vorzugsweise ebenfalls im Wege einer Mehr-Faktor-Authentifikation, zum Beispiel mittels Nutzername und Passwort sowie einer an den Laptop gebundenen Chipkarte, authentifiziert. In einem sich anschließenden Registrierungsdialog gibt der Nutzer auch eine E-Mail-Adresse für ein ihm mittels des Endgeräts 4 zugängliches E-Mail-Postfach an. Im Zuge der Registrierung wird im Schritt b) insbesondere geprüft, ob die E-Mail-Adresse des Nutzers bekannt ist und ob der Nutzer über ein gemanagtes mobiles Endgerät 1 verfügt. Ist das Ergebnis dieser Überprüfung positiv, wird an den Nutzer ein Einmalpasswort übermittelt. Dieses Einmalpasswort wird vorzugsweise aus einer Zufallszahl und unter Beachtung der im Unternehmen für die Bildung von Passwörtern bestehenden Regeln generiert und gemäß c) beispielsweise über die Vermittlungsplattform 2 an den Nutzer in Form einer verschlüsselten E-Mail übertragen. Die Übertragung der E-Mail erfolgt an die durch den Nutzer bei der Anforderung des Einmalpassworts angegebene E-Mail-Adresse, wobei der Nutzer zu dem mit dieser E-Mail-Adresse assoziierten Postfach mittels des anderen zur Verwendung in dem (Firmen-) Netzwerk zugelassenen Endgeräts 4 Zugang hat. Die Übersendung des Einmalpassworts erfolgt in jedem Falle über einen das mobile Endgerät 1 ausschließenden Weg, nämlich im Beispiel auf das im Zugriff des Endgeräts 4 befindliche E-Mail-Postfach. Vorzugsweise erfolgt auch die Anforderung des Einmalpassworts auf einem das mobile Endgerät ausschließenden Weg. Jedoch kann es gegebenenfalls auch vorgesehen sein, dass zumindest die Anforderung des Einmalpassworts mittels des mobilen Endgeräts 1 möglich ist, was durch den gestrichelten Pfeil in der Fig. 1 symbolisiert wird. Vervollständigend sei angemerkt, dass die Anforderung und Übermittlung des Einmalpassworts grundsätzlich auch ohne Einbeziehung der Vermittlungsplattform 2 (zum Beispiel per Post) erfolgen können. Insoweit ist hierzu in der Fig. 1 tatsächlich nur ein mögliches Szenario dargestellt. Für die Erfindung maßgeblich sind vielmehr die Abläufe bei der eigentlichen Authentifikation eines Nutzers sowie des von ihm verwendeten mobilen Endgeräts 1 und seiner Zugehörigkeit zum Nutzer als Voraussetzung für die Nutzung im Netzwerk bereitgestellter Ressourcen. Diese Authentifizierung erfolgt jedenfalls zwingend unter Einbeziehung der Vermittlungsplattform 2, die wie bereits ausgeführt, im Zusammenhang mit der Nutzung der Ressourcen mittels gemangter mobiler Endgeräte 1, 1', 1" vergleichbar einem "Pförtner" fungiert.

Nach dem Erhalt des Einmalpassworts startet der Nutzer auf seinem gemanagten Smartphone 1 beispielsweise eine App 5 zur Nutzung im Netzwerk für mobile Endgeräte 1, 1', 1" bereitgestellter Ressourcen. Bestandteil dieser App 5 ist ein nach dem erfindungsgemäßen Verfahren arbeitendes Modul, durch welches ein Authentifikationsvorgang angestoßen wird. Durch die App 5 beziehungsweise durch das in sie integrierte Modul wird dabei auch überprüft, ob in dem dafür vorgesehenen persistenten Speicher des mobilen Endgeräts 1 ein Kommunikationsschlüssel vorliegt. Da dies zunächst (jedenfalls bei der erstmaligen Verwendung des mobilen Endgeräts 1 für die Nutzung der Ressourcen) nicht der Fall ist, fordert die App 5 den Nutzer zur Eingabe des ihm zuvor übermittelten Einmalpassworts auf, konnektiert die Vermittlungsplattform 2 unter einer im Zusammenhang mit der App 5 verfügbar gemachten Adresse und fordert im Zuge der Übertragung des von dem Nutzer eingegebenen Einmalpassworts einen initialen Kommunikationsschlüssel an. Dieser wird nach Überprüfung des Einmalpassworts generiert und an das mobile Endgerät 1 des Nutzers übertragen. Bei der Übertragung des Einmalpassworts an die Vermittlungsplattform 2 und des initialen Kommunikationsschlüssels an das diesen anfordernde mobile Endgerät 1 werden alle in diesem Zusammenhang übertragenen Daten in verschlüsselter Form übertragen, wobei ein Public-Key-Verfahren zu Einsatz gelangt. Dies gilt in gleicher Weise zumindest für alle weiteren mit der Authentifikation zusammenhängenden Daten, welche zwischen dem mobilen Endgerät 1 und der Vermittlungsplattform 2 übertragen werden. Dabei werden alle in Richtung des mobilen Endgeräts 1 übertragenen Daten mit einem öffentlichen Schlüssel des mobilen Endgeräts 1 und alle in Richtung der Vermittlungsplattform 2 übertragenen Daten mit einem zu diesem Zweck verwendeten öffentlichen Schlüssel der Vermittlungsplattform 2 verschlüsselt. Nach dem Empfang der verschlüsselten Daten können diese durch die sie jeweils empfangende Stelle mit deren privatem Schlüssel entschlüsselt werden. Der in dieser Weise an den Nutzer beziehungsweise dessen gemanagtes Smartphone 1 übertragene initiale Kommunikationsschlüssel wird nach dem Empfang durch das Smartphone 1 mittels des privaten Schlüssels des mobilen Endgeräts 1 verschlüsselt und in einem persistenten Speicher des Endgeräts 1 abgelegt. Dem Nutzer ist es danach möglich, die dem (Firmen-) Netzwerk bereitgestellten Ressourcen mittels des ihm durch das Unternehmen zur Verfügung gestellten gemanagten Smartphones 1 zu nutzen und dazu sich und das Endgerät 1 sowie dessen Zugehörigkeit zu ihm in einem auf zwei Authentifikationsfaktoren gestützten Authentifikationsvorgang zu authentifizieren.

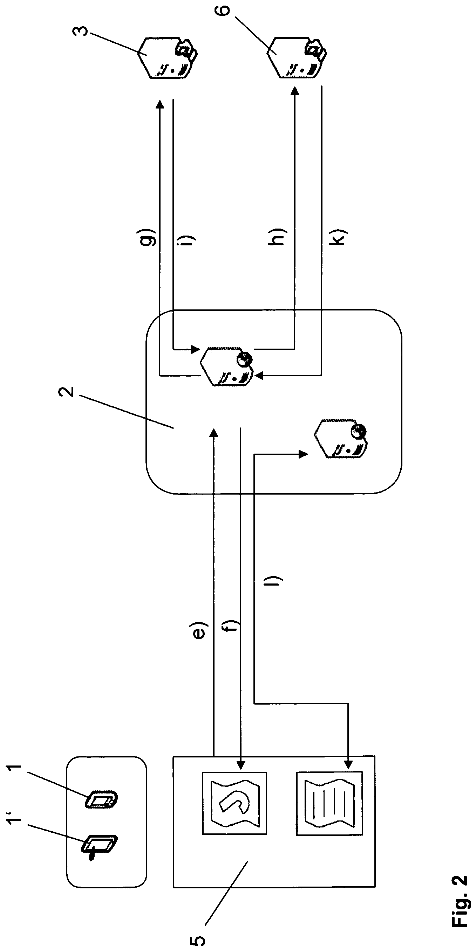

Bei Vorhandensein eines Kommunikationsschlüssels in dem persistenten Speicher des mobilen Endgeräts 1 - ein solcher Kommunikationsschlüssel liegt entweder aufgrund eines vormaligen erfolgreichen Authentifikationsvorgangs vor oder wurde unter Verwendung des Einmalpassworts angefordert und auf das mobile Endgerät 1 übertragen - wird durch die gestartete App 5 beziehungsweise das in diese zur Implementierung des Verfahrens integrierte Modul der Authentifikationsvorgang eingeleitet. Es liegt dann der so genannte, in der Fig. 2 veranschaulichte Regelfall beziehungsweise Regelbetrieb vor.

Zur Authentifikation gibt der Nutzer zunächst seine Credentials, also insbesondere einen ihn identifizierenden Identifikator, wie beispielsweise ein Nutzerkennung und ein persönliches Passwort, ein. Aus dem Passwort wird durch Anwendung einer Hashfunktion eine PIN abgeleitet und mit deren Hilfe der ebenfalls persistent im Speicher des mobilen Endgeräts 1 abgelegte private Schlüssel des mobilen Endgeräts 1 ausgelesen. Mit dessen Hilfe wiederum wird der aktuell gültige Kommunikationsschlüssel aus dem persistenten Speicher des mobilen Endgeräts 1 ausgelesen. An die Vermittlungsplattform 2 werden schließlich gemäß e) zumindest der Geräteidentifikator und der zuvor ausgelesene Kommunikationsschlüssel und der Identifikator des Nutzers übertragen. Da entsprechend dem gezeigten Beispiel, wie bevorzugt, nicht nur die sich auf das Endgerät 1 und dessen Zugehörigkeit zu dem das Endgerät 1 verwendenden Nutzer, sondern auch die Authentifikation des Nutzers selbst netzwerkseitig erfolgt, wird neben dessen Identifikator auch das Nutzerpasswort als Bestandteil der Credentials des Nutzers an die Vermittlungsplattform 2 übertragen. Dabei werden alle vorgenannten Angaben zur Übertragung mit dem öffentlichen Schlüssel der Vermittlungsplattform 2 verschlüsselt. Durch die Vermittlungsplattform 2 werden diese Angaben nach ihrem Empfang mittels des privaten Schlüssels der Vermittlungsplattform 2 entschlüsselt und deren Überprüfung veranlasst. Die Überprüfung kann dabei, gesteuert von der Vermittlungsplattform 2 durch geeignete Einrichtungen eines Backendsystems oder (gegebenenfalls teilweise) auch durch die Vermittlungsplattform 2 selbst erfolgen. Gemäß dem gezeigten Beispiel werden die Daten zur Authentifikation des Nutzers an Einrichtungen 6 eines Identitätsmanagements und die Daten zur Authentifikation des mobilen Endgeräts 1 und seiner Zugehörigkeit zu dem Nutzer an Einrichtungen 3 des Mobilgeräte-Management (MDM) zur Prüfung übermittelt - g) und h).

Die Ergebnisse dieser Überprüfung werden an die Vermittlungsplattform 2 übermittelt - i) und k). Sofern die Überprüfung ergibt, dass die Kombination aus Nutzerangaben und der sich auf das Endgerät 1 beziehenden Angaben für die Nutzung der im Netzwerk (beispielsweise durch entsprechende Server oder gegebenenfalls auch durch die Vermittlungsplattform 2 selbst) bereitgestellten Ressourcen zugelassen ist, wird die zur Vermittlungsplattform 2 bestehende Verbindung zur Übertragung von Nutzdaten für die Ressourcennutzung freigegeben oder hierfür eine entsprechende (Nutzdaten-) Verbindung hergestellt - I). Gleichzeitig wird durch die Vermittlungsplattform 2 ein neuer, für den nächsten Verbindungsaufbau beziehungsweise Authentifizierungsvorgang gültiger Kommunikationsschlüssel erzeugt und gemäß f) an das Smartphone 1 übertragen sowie dort unter Ersetzung des vorhergehenden (also nach einer erfolgreichen erstmaligen Authentifikation unter Ersetzung des initialen Kommunikationsschlüssels) im persistenten Speicher abgespeichert. Hierbei sei darauf hingewiesen, dass das Ergebnis der Überprüfung der Kombination aus Nutzerangaben und der sich auf das Endgerät 1 beziehenden Angaben aufgrund der Verknüpfung mit dem Kommunikationsschlüssel nur dann als positiv anzusehen ist, wenn der zusammen mit dieser Kombination von Angaben an die Vermittlungsplattform 2 übertragene Kommunikationsschlüssel ein gültiger Kommunikationsschlüssel ist. Andernfalls gilt der Authentifikationsvorgang als gescheitert. Nach positiver Überprüfung kann der Nutzer dann die über die Vermittlungsplattform 2 bereitgestellten Ressourcen mittels der aufgerufenen App 5 nutzen. Dabei werden die betreffenden Ressourcen entweder durch die Vermittlungsplattform 2 selbst bereitgestellt oder durch Netzwerkeinrichtungen zu denen die Vermittlungsplattform 2 den Zugriff aufgrund erfolgreicher Authentifikation ermöglicht.

Wird eine App 5 nach erfolgreicher Authentifikation und gegebenenfalls nachfolgender Nutzung der Ressourcen auf dem sie ausführenden mobilen Endgerät 1 beendet, so ist im Zuge eines erneuten Verbindungsaufbaus zur Vermittlungsplattform 2 wiederum eine in zuvor beschriebener Weise ablaufende, sich auf zwei Authentifikationsfaktoren stützende Authentifikation erforderlich. Dies gilt gegebenenfalls (das heißt, je nach Umsetzung des Verfahrens) auch für den Fall, dass die App 5 nicht beendet, sondern nur in den Hintergrund gestellt und später unter erneutem Verbindungsaufbau zur Vermittlungsplattform 2 wieder aktiviert wird.

Eine besondere Situation tritt ein, wenn der Nutzer, wie in vielen Unternehmen und IT-Umgebungen vorgesehen, sein persönliches Passwort nach einer festgelegten Geltungsdauer ändert. Wie zuvor schon beschrieben wird unter anderem unter Verwendung des Nutzerpassworts im Wege eines Hashverfahrens eine PIN gebildet, mit welcher der private Schlüssel des mobilen Endgeräts 1 zur Ablage in seinem persistenten Speicher verschlüsselt wird. Der private Schlüssel wiederum wird zur Entschlüsselung aller unter Anwendung eines Public Key Verfahrens an den Nutzer beziehungsweise an dessen gemanagtes Smartphone 1 übertragenen und dazu mit dem öffentlichen Schlüssel des Nutzers verschlüsselten Daten (insbesondere auch Daten beim Ablauf des Authentifikationsvorgans) benötigt. Er dient ferner im Rahmen eines symmetrischen Verschlüsselungsverfahrens der Verschlüsselung des durch das Smartphone 1 jeweils empfangenen für den nächsten Authentifikationsvorgang gültigen Kommunikationsschlüssels vor dessen Ablage im persistenten Speicher des Smartphones 1 und der späteren Entschlüsselung des Kommunikationsschlüssels bei dessen Verwendung für die Authentifikation. Der Hashwert der PIN zur Verschlüsselung des privaten Schlüssel des mobilen Endgeräts 1 wird, wie ebenfalls bereits ausgeführt, gesplittet, wobei ein erster Hashsplit im persistenten Speicher des Smartphones 1 und ein zweiter Hashsplit nach einer erfolgreichen Authentifizierung auf Einrichtungen des Backendsystems gespeichert wird. Nach einer Änderung beziehungsweise einem Wechsel des Nutzerpassworts kennt das zur Durchführung des Verfahrens in jede die Nutzung der im Netzwerk bereitgestellten Ressourcen ermöglichende App 5 integrierte Modul dieses neue Passwort zunächst nicht, sondern nur den ersten Teil des Hashs des alten Passworts. Mit dem Hash des neuen Nutzerpassworts kann daher beim Start einer entsprechenden App 5 nicht auf den im persistenten Speicher des Smartphones 1 abgelegten und für die Entschlüsselung des für den nächsten Authentifikationsvorgang gültigen Kommunikationsschlüssels benötigten privaten Schlüssel des mobilen Endgeräts 1 zugegriffen werden. Daher muss zunächst der alte private Schlüssel mit Hilfe des im persistenten Speicher des Smartphones 1 abgelegten Hashsplits und des zweiten, persistent in Einrichtungen des Backendsystems gehaltenen Hashsplits der PIN restauriert werden.

Dabei ist für die Abfrage des auf dem Server gespeicherten (alten) Hashsplits die Authentifikation mittels des neuen Nutzerpassworts ausreichend, da es nicht möglich ist, aus dem zweiten Teil des Hashsplits allein die komplette PIN zurückzuführen. Es werden über dieses Verfahren nicht genügend Informationen bereitgestellt werden, um die Sicherheit des Systems zu kompromittieren. Den zweiten Teil des Hashwertes (zweiten Hashsplit) des alten Passworts holen entsprechende Einrichtungen des Backendsystems aus einer Datenbank und übermitteln diesen nach einer 3 Sekunden langen Wartezeit (Schutz gegen Brute Force Attacken) an das in die auf dem Smartphone 1 ausgeführte App 5 integrierte Client-Modul. Da dieses nun beide Teile des Hashwerts besitzt, kann das alte Passwort hergestellt werden um die PIN für den Zugriff auf den privaten Schlüssel des Nutzers zu generieren. Damit kann der in dem persistenten Speicher des Smartphones 1 abgelegte Kommunikationsschlüssel entschlüsselt werden. Hat der Prozess bis hier funktioniert, generiert das entsprechende Client-Modul der App 5 ein neues Schlüsselpaar. Der neue private Schlüssel wird gesichert im persistenten Speicher des mobilen Endgeräts 1 abgelegt. Die PIN für den Zugriff auf den neuen privaten Schlüssel wird unter anderem aus dem neuen Passwort durch Hashwertbildung generiert, gesplittet und verteilt auf Smartphone 1 und Einrichtungen des Backendsystem abgelegt. Hiernach kann sich der Regelbetrieb anschließen.

### Liste der Bezugszeichen

- 1: (gemangtes) mobiles Endgerät, zum Beispiel Smartphone
- 1', 1": (gemangtes) mobiles Endgerät
- 2: Vermittlungsplattform
- 3: Einrichtungen eines Mobilgeräte-Managements
- 4: Endgerät
- 5: App
- 6: Einrichtungen eines Identitätsmanagements

## Patentansprüche

1. Authentifikationsverfahren, nach welchem zum Zweck einer Nutzung in einem Netzwerk bereitgestellter Ressourcen mittels eines gemanagten, das heißt für die Verwendung in dem Netzwerk einem Mobilgeräte-Management unterworfenen mobilen Endgeräts (1) eine sich auf mindestens zwei Faktoren stützende Authentifikation erfolgt, wobei dem mobilen Endgerät (1) eine Nutzung der Ressourcen ausschließlich über eine Vermittlungsplattform (2) ermöglicht ist, so dass ein die Nutzung der Ressourcen mit dem gemanagten mobilen Endgerät (1) wünschender Nutzer sich mittels seiner Credentials, nämlich eines ihn kennzeichnenden Identifikators und eines seine Identität bestätigenden persönlichen Passworts authentifiziert und ferner selbsttätig eine das mobile Endgerät (1) identifizierende sowie dessen Zugehörigkeit zum Nutzer bestätigende Authentifizierung erfolgt, indem ein zuvor in Einrichtungen (3) des Mobilgeräte-Managements registrierter Geräteidentifikator des mobilen Endgeräts (1) durch das mobile Endgerät (1) an die Vermittlungsplattform (2) gemeinsam mindestens mit dem Identifikator des Nutzers und mit einem Kommunikationsschlüssel übertragen wird, der in einem persistenten Speicher des mobilen Endgeräts (1) gehalten wird, aus welchem ein gültiger Kommunikationsschlüssel nur bei korrekter Eingabe der Credentials des Nutzers auslesbar ist **dadurch gekennzeichnet, dass** mit Beendigung des Authentifikationsvorgangs der bis dahin gültige Kommunikationsschlüssel in dem persistenten Speicher des mobilen Endgeräts (1) durch einen neuen von der Verbindungsplattform (2) bezogenen, nur im Zusammenhang mit dem nächsten Verbindungsaufbau zur Vermittlungsplattform (2) und für das ihn beziehende mobile Endgerät (1) gültigen Kommunikationsschlüssel ersetzt wird, wobei der Bezug eines initialen Kommunikationsschlüssels die Eingabe eines Einmalpassworts durch den Nutzer erfordert, welches dieser bei einer Registrierung des mobilen Endgeräts (1) zur Nutzung der Ressourcen über einen das mobile Endgerät (1) ausschließenden Weg erhält.

2. Verfahren nach Anspruch 1, **dadurch gekennzeichnet, dass** während des Authentifikationsvorgangs und bei der Nutzung der Ressourcen übertragene Daten verschlüsselt übertragen werden.

3. Verfahren nach Anspruch 2, wobei die zur Authentifikation zwischen dem gemangten mobilen Endgerät (1) und der Vermittlungsplattform (2) übertragenen Daten nach einem Public Key Verfahren verschlüsselt werden, bei dem für das mobile Endgerät ein Schlüsselpaar mit einem privaten und einem öffentlichen Schlüssel erzeugt wird, wobei an das mobile Endgerät (1) übertragene Daten mit dessen öffentlichen Schlüssel und an die Vermittlungsplattform (2) übertragene Daten mit einem öffentlichen Schlüssel der Vermittlungsplattform (2) verschlüsselt werden, **dadurch gekennzeichnet, dass** der private Schlüssel des mobilen Endgeräts (1) verwendet wird sowohl zur Entschlüsselung von dem mobilen Endgerät (1) empfangener Daten, wie insbesondere des durch die Vermittlungsplattform (2) nach erfolgreicher Authentifikation für den nächsten Verbindungsaufbau mit der Vermittlungsplattform (2) übertragenen Kommunikationsschlüssels, als auch für eine symmetrische Verschlüsselung des in dieser Weise empfangenen und anschließend in dem persistenten Speicher des Endgeräts (1) abgelegten Kommunikationsschlüssels, wobei der private Schlüssel des Endgeräts (1) mit einer aus dem persönlichen Passwort des Nutzers durch Anwendung einer Hashfunktion gebildeten PIN symmetrisch verschlüsselt und ebenfalls persistent in dem mobilen Endgerät (1) gespeichert wird.

4. Verfahren nach Anspruch 3, **dadurch gekennzeichnet, dass** das persönliche Passwort des Nutzers zur Erzeugung der PIN bei der Hashwertbildung durch ein Salt ergänzt wird, welches unter Einbeziehung von Entropie-Quellen, wie einen Bewegungssensor oder ein Mikrofon des mobilen Endgeräts (1), mittels eines Zufallsgenerators erzeugt wird.

5. Verfahren nach Anspruch 3 oder 4, **dadurch gekennzeichnet, dass** ein Hashsplit, nämlich ein erster Teil des bei der Anwendung der Hashfunktion entstehenden Hashwertes in dem persistenten Speicher des mobilen Endgeräts (1) und ein weiter Hashsplit, nämlich ein zweiter Teil des bei der Anwendung der Hashfunktion entstehenden Hashwertes persistent in Einrichtungen der Vermittlungsplattform (2) gespeichert wird.

6. Verfahren nach einem der Ansprüche 1 bis 5, **dadurch gekennzeichnet, dass** der für den jeweils nächsten Verbindungsaufbau zur Vermittlungsplattform (2) gültige Kommunikationsschlüssel seitens der Vermittlungsplattform (2) in einer Datenbank in Zuordnung zu dem Nutzer und/oder dem von ihm verwendeten mobilen Endgerät (1) gespeichert wird.

7. Verfahren nach einem der Ansprüche 1 bis 6, **dadurch gekennzeichnet, dass** das Einmalpasswort mittels eines Zufallszahlengenerators gebildet wird, wobei die Erzeugung und Versendung des Einmalpassworts nur erfolgt, sofern eine bei der Registrierung eines mobilen Endgeräts (1) für die Nutzung der Ressourcen erfolgende Überprüfung ergibt, dass es sich bei dem entsprechenden mobilen Endgerät (1) um ein gemangtes Endgerät handelt.

8. Verfahren nach Anspruch 1 oder 7, **dadurch gekennzeichnet, dass** das Einmalpasswort an ein E-Mail-Postfach übertragen wird, auf welches der Nutzer mittels eines anderen bereits für die Nutzung in dem Netzwerk registrierten Endgeräts (4) Zugriff hat, wobei zum Abruf der entsprechenden E-Mail ebenfalls eine Authentifikation erforderlich ist.

9. Verfahren nach einem der Ansprüche 1 bis 8 unter Verwendung eines mit Mobilfunksende- und Empfangsmitteln ausgestatteten gemangten mobilen Endgeräts (1), **dadurch gekennzeichnet, dass** für die sich auf das mobile Endgerät (1) und dessen Zugehörigkeit zu einem Nutzer beziehende Authentifikation die IMEI des betreffenden mobilen Endgeräts (1) als Geräteidentifikator oder als Teil des Geräteidentifikators verwendet wird.

10. Verfahren nach einem der Ansprüche 1 bis 9, **dadurch gekennzeichnet, dass** als Geräteidentifikator oder als Teil des Geräteidentifikators die MAC-Adresse des mobilen Endgeräts (1) verwendet wird.

11. Verfahren nach einem der Ansprüche 1 bis 10, **dadurch gekennzeichnet, dass** der Authentifikationsvorgang durch eine von dem Nutzer auf dem mobilen Endgerät (1) zur Verwendung der Ressourcen gestartete App (5) eingeleitet wird, wobei in alle die Nutzung von Ressourcen ermöglichenden Apps (5) ein entsprechendes, den Authentifikationsvorgang einleitendes Modul integriert wird.

12. Verfahren nach Anspruch 11, **dadurch gekennzeichnet, dass** bei einem zur Nutzung der Ressourcen erfolgenden Start einer App (5) auf dem mobilen Endgerät (1) das Vorhandensein eines Kommunikationsschlüssels in dem persistenten Speicher des mobilen Endgeräts (1) überprüft wird und, wenn dies nicht gegeben ist, bei der Vermittlungsplattform (2) ein initialer Kommunikationsschlüssel angefordert wird, wobei der Nutzer von der betreffenden App (5) hierbei zur Eingabe des dazu erforderlichen Einmalpassworts aufgefordert wird.

## Claims

1. Authentication method whereby, for the purpose of using resources made available in a network by means of a managed mobile terminal device (1), i.e. for use in the network under the control of a mobile device management system, an authentication based on at least two factors is run, and a use of the resources by the mobile terminal device (1) is enabled exclusively via a switching platform (2) so that a user wishing to use the resources by means of the managed mobile terminal device (1) authenticates himself by means of his credentials, namely an identifier characterising him and a personal password confirming his identity, and an authentication identifying the mobile terminal device (1) and its affiliation with the user is also automatically run whereby a device identifier of the mobile terminal device (1) registered beforehand in devices (3) of the mobile device management system is transmitted by the mobile terminal device (1) to the switching platform (2) together with at least the identifier of the user and with a communication key that is held in a persistent memory of the mobile terminal device (1) from which a valid communication key can be read only if the credentials of the user are correctly entered, **characterised in that**
on completion of the authentication process, the thus far valid communication key in the persistent memory of the mobile terminal device (1) is replaced by a new communication key applied by the switching platform (2) that is valid only in connection with the next connection established with the switching platform (2) and for the mobile terminal device (1) designating it, and the designation of an initial communication key requires a one-off password to be entered by the user which the latter receives via a route excluding the mobile terminal device (1) when registering the mobile terminal device (1) with a view to using the resources.

2. Method as claimed in claim 1, **characterised in that** data transmitted during the authentication process and when using the resources is transmitted in encrypted form.

3. Method as claimed in claim 2, whereby data transmitted between the managed mobile terminal device (1) and the switching platform (2) for authentication purposes is encrypted in accordance with a public key method whereby a key pair comprising a private and a public key is created for the mobile terminal device and data transmitted to the mobile terminal device (1) is encrypted with its public key and data transmitted to the switching platform (2) is encrypted with a public key of the switching platform (2), **characterised in that** the private key of the mobile terminal device (1) is used both for the decryption of data received from the mobile terminal device (1), such as the communication key transmitted by the switching platform (2) after a successful authentication for setting up the next connection to the switching platform (2) in particular, and for a symmetrical encryption of the communication key received in this manner and then stored in the persistent memory of the terminal device (1), and the private key of the terminal device (1) is symmetrically encrypted with a PIN made up of the personal password of the user by applying a hash function and is also persistently stored in the mobile terminal device (1).

4. Method as claimed in claim 3, **characterised in that** the personal password of the user used to create the PIN during the process of creating the hash value is supplemented by a salt which is generated taking account of entropy sources such as a motion sensor or a microphone of the mobile terminal device (1) by means of a random generator.

5. Method as claimed in claim 3 or 4, **characterised in that** a hash split, namely a first part of the hash value resulting when the hash function is applied in the persistent memory of the mobile terminal device (1), and another hash split, namely a second part of the hash value resulting when the hash function is applied, is persistently stored in devices of the switching platform (2).

6. Method as claimed in any of claims 1 to 5, **characterised in that** the communication key valid respectively for setting up the next connection to the switching platform (2) is stored, correlated with the user and/or the mobile terminal device (1) used by him, in a data bank by the switching platform (2).

7. Method as claimed in any of claims 1 to 6, **characterised in that** the one-off password is created by means of a random number generator, and the one-off password is created and sent only if a check run when registering a mobile terminal device (1) for the use of the resources ascertains that the corresponding mobile terminal device (1) is a managed mobile device.

8. Method as claimed in claim 1 or 7, **characterised in that** the one-off password is transmitted to an e-mail box to which the user has access by means of another terminal device (4) already registered for use in the network and an authentication is also needed to retrieve the corresponding e-mail.

9. Method as claimed in any of claims 1 to 8 using a managed mobile terminal device (1) equipped with mobile radio transmitting and receiving means, **characterised in that** the IMEI of the relevant mobile terminal device (1) is used as a device identifier or as part of the device identifier for the authentication relating to the mobile terminal device (1) and its affiliation with a user.

10. Method as claimed in any of claims 1 to 9, **characterised in that** the MAC address of the mobile terminal device (1) is used as the device identifier or as part of the device identifier.

11. Method as claimed in any of claims 1 to 10, **characterised in that** the authentication process is initiated by an app (5) started by the user on the mobile terminal device (1) with a view to using the resources, and a co-operating module initiating the authentication process is integrated in all apps (5) enabling the use of resources.

12. Method as claimed in claim 11, **characterised in that** when an app (5) is started on the mobile terminal device (1) with a view to using the resources, a check is run in the persistent memory of the mobile terminal device (1) for the presence of a communication key and if no such presence is found, an initial communication key is requested at the switching platform (2) and the user of the relevant app (5) is thus prompted to enter the one-off password needed for this purpose.

## Revendications

1. Procédé d'authentification, selon lequel une authentification s'appuyant sur au moins deux facteurs est effectuée dans le but d'une utilisation des ressources mises à disposition dans un réseau au moyen d'un terminal mobile (1) géré, c'est-à-dire soumis à une gestion d'appareils mobiles pour l'utilisation dans le réseau, une utilisation des ressources par le terminal mobile (1) étant rendue possible exclusivement par le biais d'une plateforme de commutation (2),
de sorte qu'un utilisateur qui souhaite utiliser les ressources avec le terminal mobile (1) géré s'authentifie au moyen de ses justificatifs d'identité, à savoir un identificateur qui l'identifie et un mot de passe personnel qui confirme son identité, et une authentification qui identifie le terminal mobile (1) et qui confirme aussi son appartenance à l'utilisateur ayant en outre lieu automatiquement par la transmission, par le terminal mobile (1) à la plateforme de commutation (2), d'un identificateur d'appareil du terminal mobile (1) préalablement enregistré dans des dispositifs (3) dans la gestion d'appareils mobiles, conjointement au moins avec l'identificateur de l'utilisateur et avec une clé de communication, laquelle est conservée dans une mémoire permanente du terminal mobile (1), depuis laquelle une clé de communication valide ne peut être chargée qu'en cas de saisie correcte des justificatifs d'identité de l'utilisateur, **caractérisé en ce que**
avec la fin du processus d'authentification, la clé de communication dans la mémoire permanente du terminal mobile (1), qui était valide jusqu'à ce moment, est remplacée par une nouvelle clé de communication approvisionnée par la plateforme de commutation (2), valide uniquement en association avec le prochain établissement de liaison avec la plateforme de commutation (2) et pour le terminal mobile (1) qui l'a approvisionnée, l'approvisionnement d'une clé de communication initiale exigeant la saisie d'un mot de passe à usage unique par l'utilisateur, qui obtient celui-ci lors d'un enregistrement du terminal mobile (1) en vue de l'utilisation des ressources par une voie excluant le terminal mobile (1).

2. Procédé selon la revendication 1, **caractérisé en ce que** les données transmises pendant le processus d'authentification et lors de l'utilisation des ressources sont transmises chiffrées.

3. Procédé selon la revendication 2, les données transmises en vue de l'authentification entre le terminal mobile (1) géré et la plateforme de commutation (2) étant chiffrées selon un procédé de clé publique avec lequel une paire de clés, comprenant une clé privée et une clé publique, sont générées pour le terminal mobile, les données transmises au terminal mobile (1) étant chiffrées avec sa clé publique et les données transmises à la plateforme de commutation (2) étant chiffrées avec une clé publique de la plateforme de commutation (2), **caractérisé en ce que** la clé privée du terminal mobile (1) est utilisée à la fois pour le déchiffrement des données reçues par le terminal mobile (1), comme notamment la clé de communication transmise par la plateforme de commutation (2) après une authentification réussie pour le prochain établissement de liaison avec la plateforme de commutation (2), et pour un chiffrement symétrique de la clé de communication reçue de cette manière et ensuite stockée dans la mémoire permanente du terminal mobile (1), la clé privée du terminal mobile (1) étant chiffrée symétriquement avec un PIN formé à partir du mot de passe personnel de l'utilisateur en utilisant une fonction de hachage et également mise en mémoire permanente dans le terminal mobile (1).

4. Procédé selon la revendication 3, **caractérisé en ce que** le mot de passe personnel de l'utilisateur, en vue de la génération du PIN lors de la formation de la valeur de hachage, est complété par une valeur Salt qui est générée au moyen d'un générateur aléatoire en faisant intervenir des sources d'entropie comme un détecteur de mouvement ou un microphone du terminal mobile (1).

5. Procédé selon la revendication 3 ou 4, **caractérisé en ce qu'**une fraction de hachage, à savoir une première partie de la valeur de hachage produite lors de l'utilisation de la fonction de hachage, est enregistrée dans la mémoire permanente du terminal mobile (1) et une fraction de hachage supplémentaire, à savoir une deuxième partie de la valeur de hachage produite lors de l'utilisation de la fonction de hachage, est mise en mémoire de manière permanente dans des dispositifs de la plateforme de commutation (2).

6. Procédé selon l'une des revendications 1 à 5, **caractérisé en ce que** la clé de communication valide respectivement pour le prochain établissement de liaison avec la plateforme de commutation (2) est mise en mémoire du côté de la plateforme de commutation (2) dans une base de données en association avec l'utilisateur et/ou le terminal mobile (1) qu'il utilise.

7. Procédé selon l'une des revendications 1 à 6, **caractérisé en ce que** le mot de passe à usage unique est formé au moyen d'un générateur aléatoire, la génération et l'envoi du mot de passe à usage unique n'ayant lieu que sous réserve qu'un contrôle effectué lors de l'enregistrement d'un terminal mobile (1) pour l'utilisation des ressources révèle que le terminal mobile (1) correspondant est un terminal géré.

8. Procédé selon l'une des revendications 1 à 7, **caractérisé en ce que** le mot de passe à usage unique est transmis sur une boîte de messagerie électronique à laquelle l'utilisateur à accès au moyen d'un autre terminal (4), déjà enregistré pour l'utilisation dans le réseau, une authentification étant également nécessaire pour consulter le courrier électronique correspondant.

9. Procédé selon l'une des revendications 1 à 8 en utilisant un terminal mobile (1) géré équipé de moyens d'émission et de réception radioélectriques, **caractérisé en ce que** l'IMEI du terminal mobile (1) concerné est utilisée comme identificateur d'appareil ou comme partie de l'identificateur d'appareil pour l'authentification se rapportant au terminal mobile (1) et son appartenance à un utilisateur.

10. Procédé selon l'une des revendications 1 à 9, **caractérisé en ce que** l'adresse MAC du terminal mobile (1) est utilisée comme identificateur d'appareil ou comme partie de l'identificateur d'appareil.

11. Procédé selon l'une des revendications 1 à 10, **caractérisé en ce que** le processus d'authentification est initié par une application (5) démarrée par l'utilisateur sur le terminal mobile (1) en vue de l'utilisation des ressources, un module correspondant initiant le processus d'authentification étant intégré dans toutes les applications (5) qui rendent possible l'utilisation de ressources.

12. Procédé selon la revendication 11, **caractérisé en ce que** lorsque le démarrage d'une application (5) en vue de l'utilisation des ressources a eu lieu sur le terminal mobile (1), la présence d'une clé de communication dans la mémoire permanente du terminal mobile (1) est contrôlée et, en l'absence de celle-ci, une clé de communication initiale est sollicitée auprès de la plateforme de commutation (2), l'utilisateur étant alors invité par l'application (5) concernée à saisir le mot de passe à usage unique nécessaire à cet effet.
